(19) Europäisches Patentamt
European Patent Office
Office européen des brevets

(11) **EP 3 626 374 B1**

(12) **EUROPÄISCHE PATENTSCHRIFT**

(45) Veröffentlichungstag und Bekanntmachung des Hinweises auf die Patenterteilung:
**09.03.2022  Patentblatt 2022/10**

(21) Anmeldenummer: **19198116.6**

(22) Anmeldetag: **18.09.2019**

(51) Internationale Patentklassifikation (IPC):
***B23D 61/04*** *(2006.01)*

(52) Gemeinsame Patentklassifikation (CPC):
**B23D 61/04**

(54) **TANGENTIAL BESTÜCKTES KREISSÄGEBLATT UND VERFAHREN ZU DESSEN NACHSCHÄRFEN**

TANGENTIALLY FITTED CIRCULAR SAW BLADE AND METHOD OF RESHARPENING THE SAME

LAME DE SCIE CIRCULAIRE MONTÉE TANGENTIELLEMENT ET SON PROCÉDÉ DE RÉAFFÛTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2018   DE 102018123117**

(43) Veröffentlichungstag der Anmeldung:
**25.03.2020   Patentblatt 2020/13**

(73) Patentinhaber: **Leitz GmbH & Co. KG
73447 Oberkochen (DE)**

(72) Erfinder:
• **Robert, Schlosser
4741 Wendling (AT)**
• **Erwin, Hörmanseder
4741 Wendling (AT)**

(74) Vertreter: **Gramm, Lins & Partner
Patent- und Rechtsanwälte PartGmbB
Theodor-Heuss-Straße 1
38122 Braunschweig (DE)**

(56) Entgegenhaltungen:
EP-A1- 2 910 327     JP-A- 2008 006 530
SU-A1- 1 323 387     US-A- 4 135 421

**Beschreibung**

Die Erfindung betrifft ein Kreissägeblatt mit einem Tragkörper und einer Mehrzahl in dessen Umfang vorgesehenen Ausnehmungen, die eine Sitzfläche und eine Rückenfläche ausbilden und in die jeweils ein Schneidling mit einer in Drehrichtung weisenden Spanfläche und einer nach radial außen weisenden Freifläche eingesetzt ist, die in einem ersten Winkel zur Spanfläche verläuft, und der Schneidling eine zweite Freifläche aufweist, die in einem zweiten Winkel zur Spanfläche verläuft, wobei der erste Winkel größer ist als der zweite Winkel. Die zweite Freifläche schließt sich an die erste Freifläche unmittelbar an. Außerdem betrifft die Erfindung ein Verfahren zum Nachschärfen eines Kreissägeblattes.

Ein solches Kreissägeblatt gemäß dem Oberbegriff des Anspruchs 1 ist aus JP 2008 006530 A bekannt.

Ein solches Kreissägeblatt ist auch beispielsweise aus der DE 20 2004 005 773 U1 oder der WO 2015/098360 A1 bekannt.

Zur Vereinfachung des Nachschärfens von Kreissägeblättern wird zunehmend gefordert, dass die Schneidlinge überwiegend durch Schleifen an der Spanfläche geschärft werden. Um dieser Anforderung gerecht werden zu können, ist es notwendig, die Nachschärfzone der Spanfläche gegenüber der Freifläche stark zu erhöhen. Hierzu bietet sich das bekannte Kreissägeblatt an, das im Wesentlichen tangential mit den Schneidlingen bestückt ist. Hierbei schließt die Spanfläche des Schneidlings mit dem Spanraum im Tragkörper ab und beim Nachschärfen wird sowohl das Material an der Spanfläche des Schneidlings als auch im Spanraum des Tragkörpers abgeschliffen, sodass die Lage des Schneidlings zum Spanraum unverändert bleibt und sich der Spanraum entgegen der Drehrichtung vergrößert. Die Anzahl der Nachschärfintervalle wird begrenzt durch die Länge des Schneidlings (in tangentialer Richtung) und somit durch die Länge von dessen Freifläche. Wird nur an der Spanfläche nachgeschärft, verringert sich der Freiwinkel bei jedem Schärfvorgang, wodurch sich die Reibung an der Freifläche erhöht. Ist die Freifläche zu lang, schlägt das in Drehrichtung hintere Ende in das zu bearbeitende Werkstück, weil das in Drehrichtung hintere Ende der Freifläche dann radial über den Flugkreisdurchmesser der Schneide hinaus gelangt, was zu Geräuschbildung und/oder zur Beschädigung des Werkstücks bzw. des Werkzeugs führen kann.

Auch die US 4,135,421 A1, die US 6,883,412 B1 und die DE 93 07 394 U1 offenbaren Kreissägeblätter mit im Wesentlichen tangential ausgerichteten Schneidlingen. Bei den aus der DE 93 07 394 U1 und der US 6,883,412 B1 bekannten Kreissägeblättern sind die tangential ausgerichteten Schneidzähne an der Spanfläche mit polykristallinem Diamant beschichtet, sodass diese nicht an der Spanfläche nachgeschärft werden können bzw. dürfen.

Die SU 1323387 A1 offenbart ein Kreissägeblatt mit tangential eingesetzten Schneidlingen. Die Schneidlinge stehen in Drehrichtung betrachtet über den Spanraum hervor. Beim Nachschärfen wird dieser Überstand reduziert. Wird der Überstand zu gering, muss der Schneidling aus seinem Sitz ausgelötet, dann in tangentialer Richtung in seinem Sitz verschoben und anschließend wieder festgelötet werden, bevor die Spanfläche geschliffen werden kann.

Die EP 2 910 327 A1 offenbart ein Kreissägeblatt mit tangential eingesetzten Schneidlingen, die in radialer Richtung unterschiedlich groß sind.

Die US 4,135,421 A offenbart ein Kreissägeblatt mit tangential eingesetzten Schneidlingen, bei dem die vor den Schneidlingen angeordneten Spanräume in Umfangsrichtung von einer festen dünnen Wand überspannt werden, sodass sie durch einen seitlich und radial nach außen öffnenden Hohlraum ausbilden.

Hiervon ausgehend, liegt der Erfindung die Aufgabe zugrunde, den Schneidling für ein im Wesentlichen tangential bestücktes Kreissägeblatt so zu verbessern, dass er möglichst viele Nachschärfintervalle übersteht, bis er soweit abgenutzt ist, dass das Kreissägeblatt nicht mehr nachgeschärft werden kann, und die beschriebenen Nachteile vermieden werden.

Zur Lösung dieser Aufgabe ist bei einem gattungsgemäßen Kreissägeblatt vorgesehen, dass die in radialer Richtung projizierte erste Länge des Schneidlings größer ist als seine in tangentialer Richtung projizierte zweite Länge, und dass der erste Winkel im Bereich von 50° bis 90° und der zweite Winkel im Bereich von 30° bis 80° liegt.

Durch diese Ausgestaltung wird es möglich, beim ausschließlichen Nachschärfen an der Spanfläche den Nachschärfbereich konstruktiv zu begrenzen und bezogen auf die Zahnhöhe eine ausreichend stabile Restzahndicke zu gewährleisten. Beim Nachschärfen an Span- und Freifläche kann durch diese Ausgestaltung erreicht werden, dass die Anzahl der möglichen Nachschärfungen weiter erhöht wird, indem der Schneidling nahezu vollständig aufgebraucht wird, wobei das Verhältnis von Spanfläche zu Freifläche nach jedem Schärfvorgang konstant gehalten werden kann, wodurch sich die Gebrauchswerteigenschaften des Kreissägeblatts durch das Schärfen nicht ändern.

Wenn der erste Winkel größer ist als der zweite Winkel, wird sichergestellt, dass beim ausschließlichen Schärfen an der Spanfläche der Freiwinkel nicht zu klein werden kann bzw. das in Drehrichtung hintere Ende der zweiten Freifläche im Betrieb des Kreissägeblattes nicht auf das Werkstück aufschlagen kann.

Vorzugsweise sind die erste Kantenlänge der ersten Freifläche und die zweite Kantenlänge der Spanfläche annähernd gleich groß. Eine Abweichung von +/- 10% ist dabei tolerabel.

Der erste Winkel liegt vorzugsweise bei 60°.

Der zweite Winkel liegt vorzugsweise bei 40°.

Eine hohe Lebensdauer des Kreissägeblattes stellt sich dann ein, wenn die Kantenlänge der Spanfläche und die erste Kantenlänge der ersten Freifläche so ausgewählt werden, dass das Verhältnis der ersten Kantenlängen im Neuzustand des Schneidlings identisch ist zum Verhältnis der Kantenlängen, die sich nach dem letztmöglichen Schärfvorgang am Schneidling einstellen.

Das erfindungsgemäße Nachschärfen des Kreissägeblattes erfolgt also dadurch, dass eine Spanfläche und eine Freifläche des Schneidlings spanabhebend so bearbeitet werden, dass das Verhältnis $\frac{a1}{b1}$ einer Kantenlänge a1 der Spanfläche und einer Kantenlänge b1 der Freifläche vor und nach der spanabhebenden Bearbeitung identisch ist.

Durch das konstante Kantenlängenverhältnis vom Neuzustand bis zum letztmöglichen Schärfvorgang wird die Schnittqualität des Kreissägeblattes konstant gehalten. Gegenüber herkömmlichen Kreissägeblättern wird das Nachschärfverhältnis umgekehrt, das heißt der Schärfabtrag an der Spanfläche ist dadurch bis zu dreimal höher als an der Freifläche.

Durch die im Wesentlichen tangentiale Erstreckung des Scheidlings kann die Spanfläche mit großen Achswinkeln von mehr als 10°, insbesondere in einem Bereich von 10° bis 30° ausgeführt werden.

Wenn der Winkel zwischen der Sitzfläche und der Rückfläche kleiner als 90° ist, insbesondere kleiner als 80° oder besser noch kleiner als 70° ist, kann der Schneidling an seiner Rückenfläche besser gegen die Schnittkräfte abgestützt werden. Zusätzlich bewirkt die sich im Wesentlichen tangential erstreckende Sitzfläche beim thermischen Fügen des Schneidlings, z. B. durch Löten, eine geringere radiale Erstreckung der Wärmeeinflusszone in den Tragkörper, wodurch der Sägezahn weniger rissanfällig wird, was der Langlebigkeit des Kreissägeblattes zu Gute kommt.

Die Zahngeometrie des Schneidlings ist vorzugsweise punktsymmetrisch. Es ist aber jede Zahngeometrie möglich. Um den Verschleiß gering zu halten, können die Schneidlinge mit geeigneten Hartstoffschichten beschichtet werden.

Mit Hilfe einer Zeichnung soll ein Ausführungsbeispiel der Erfindung nachfolgend näher beschrieben werden. Es zeigen:

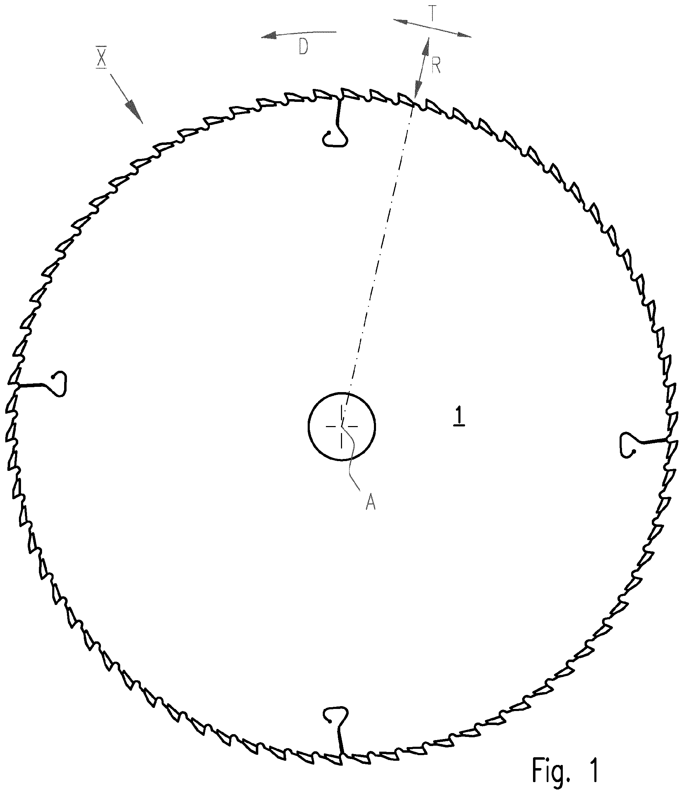

Figur 1 -     die Ansicht eines Kreissägeblattes;
Figur 2 -     ein Segment des Kreissägeblattes;

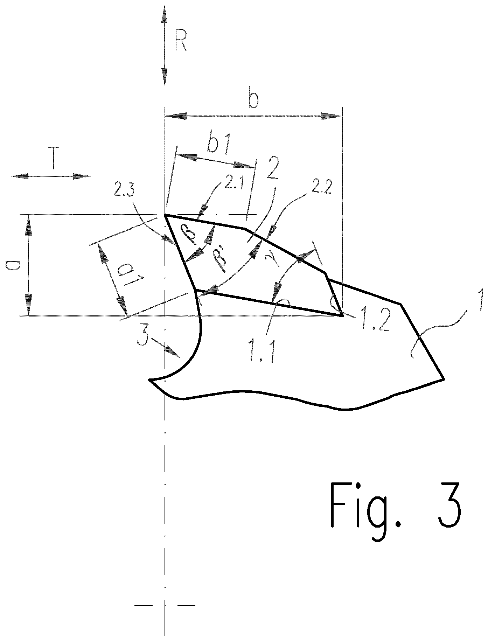

Figur 3 -     eine vergrößerte Teildarstellung gemäß Sichtpfeil III nach Figur 2;
Figur 4 -     die schematische Darstellung der einzelnen Nachschärfzonen im Verhältnis Spanfläche zu Freifläche;
Figur 5 -     einen Ausschnitt aus dem Kreissägeblatt nach dem letztmöglichen Nachschärfvorgang;
Figur 6 -     Nachschärfzonen eines Schneidlings, die nur an der Spanfläche ausgeführt sind;
Figur 7 -     die Ausführungsform eines punktsymmetrisch ausgebildeten Schneidlings;
Figur 8 -     die schematische Darstellung der Nachschärfzonen des Schneidlings nach Figur 7;
Figur 9 -     den Schneidling nach Figur 7 nach dem letztmöglichen Nachschärfvorgang;
Figur 10a -     eine Teilseitenansicht des Sägeblattes in axialer Richtung;
Figur 10b -     eine Teildraufsicht auf das Kreissägeblatt gemäß Sichtpfeil X nach Figur 1;
Figur 11 -     verschiedene Zahnprofilformen von Schneidlingen in schematischer Darstellung.

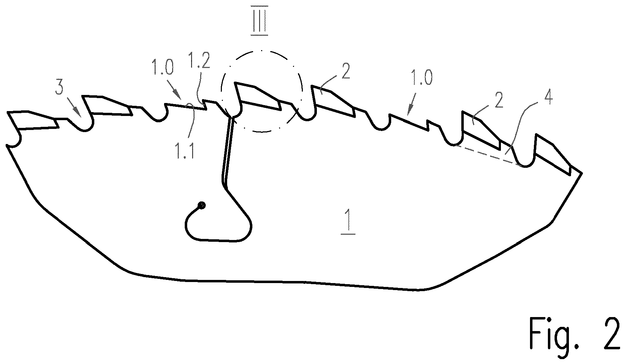

Das tangential bestückbare Kreissägeblatt besteht im Wesentlichen aus dem Tragkörper 1 und den darin angeordneten Schneidlingen 2 und wird um die Drehachse A in Drehrichtung D angetrieben. Die im Umfang des Kreissägeblattes regelmäßig beabstandet vorgesehenen Ausnehmungen 1.0 (vgl. Figur 2) bilden eine Sitzfläche 1.1 und eine Rückenfläche 1.2 aus, in denen jeweils ein Schneidling 2 stoffschlüssig verbunden, insbesondere gelötet, geschweißt oder geklebt wird. In Drehrichtung D vor jeder Ausnehmung 1.0 ist ein Spanraum 3 vorgesehen, an den sich der Schneidling 2 unmittelbar anschließt. In Drehrichtung D vorne ist am Schneidling 2 die Spanfläche 2.3 ausgebildet, radial außen schließen sich an die Spanfläche 2.3 entgegen der Drehrichtung D die erste Freifläche 2.1 und an diese die zweite Freifläche 2.2 an.

Die erste Freifläche 2.1 ist zur Spanfläche 2.3 in einem Winkel β von 50° bis 90°, vorzugsweise 60° angeordnet. Die sich an die erste Freifläche 2.1 anschließende zweite Freifläche 2.2 verläuft in einem Winkel β' zur Spanfläche 2.3 von 30° bis 80°, bevorzugt von 40°. Mit seiner in radialer Richtung R nach innen weisenden Fläche liegt der Schneidling 2 auf der Sitzfläche 1.1 auf und stößt mit seiner Rückseite an die Rückenfläche 1.2 an.

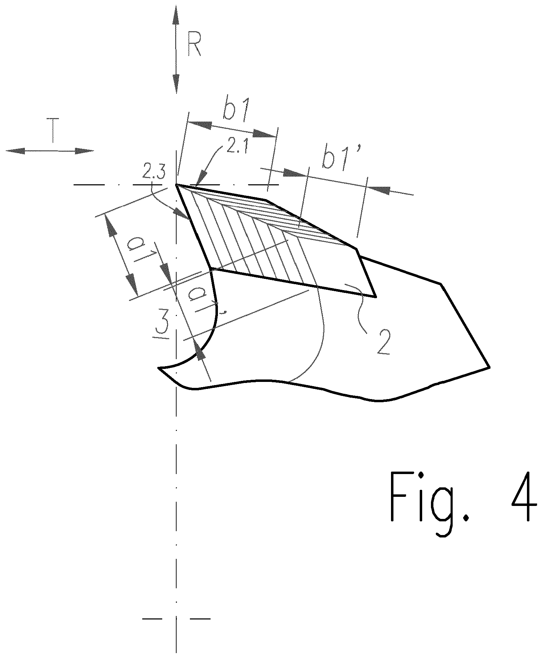

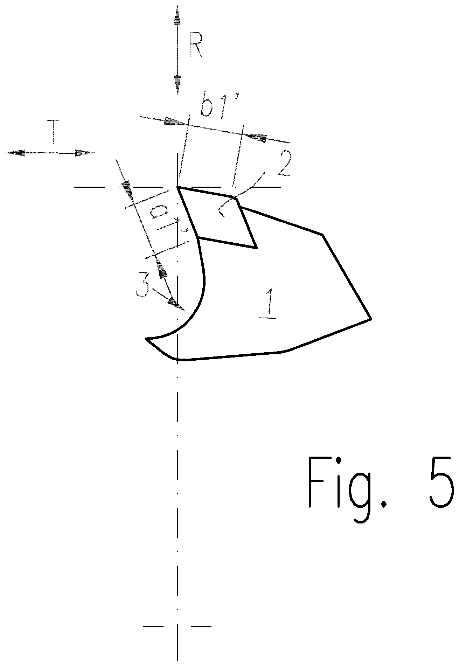

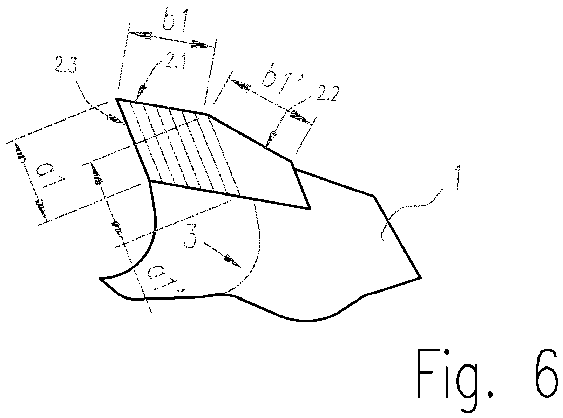

Die in radialer Richtung R erste projizierte Gesamtlänge b und die in tangentialer Richtung T zweite projizierte Gesamtlänge a des Schneidlings 2 stehen in einem Verhältnis b/a, das größer als 1 ist und insbesondere maximal 2:1, vorzugsweise 3:1 beträgt. Die durch die entsprechenden, in Figur 4 dargestellten Kantenlängen b1 der ersten Freifläche 2.1 und a1 der Spanfläche 2.3 sind so gewählt, dass die Spanfläche 2.3 und die erste Freifläche 2.1 annähernd gleich groß sind. Wie Figur 4 zeigt, können zum Nachschärfen des Schneidlings 2 die Spanfläche 2.3 und die erste Freifläche 2.1 bearbeitet werden, sodass sich nicht nur die Kantenlänge a1 der Spanfläche 2.3, sondern auch die Kantenlänge b1 der Freifläche 2.1 ändern, ohne dass die Schneidengeometrie beeinflusst wird. Der Spanraum 3 verschiebt sich entsprechend, weil das zum Nachschärfen verwendete, rotierende Schleifwerkzeug in den Tragkörper 1 eintaucht, und dadurch den Spanraum 3 vergrößert. In Figur 4 sind durch die parallelen Linien am Schneidling 2 acht Nachschärfvorgänge schematisch dargestellt, bis der in Figur 5 dargestellte letzte Zustand des Schneidlings 2 erreicht wird, nach dem kein weiteres Nachschleifen mehr möglich ist, sondern das Kreissägeblatt ausgetauscht werden muss. Figur 6 entspricht der Darstellung von Figur 4 wobei hier nur die Nachschärfzonen an der Spanfläche 2.3 bis zum Ende der ersten Freifläche 2.1 dargestellt sind.

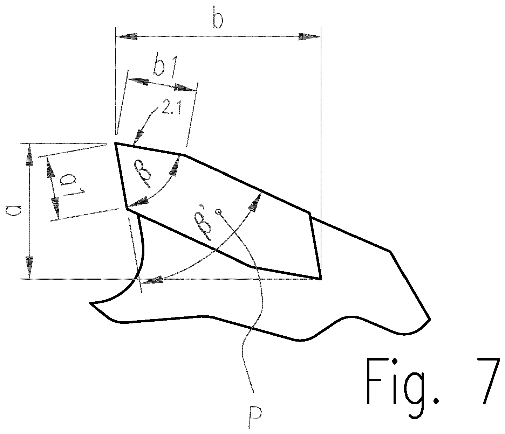

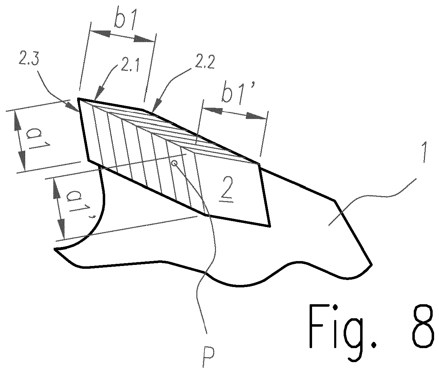

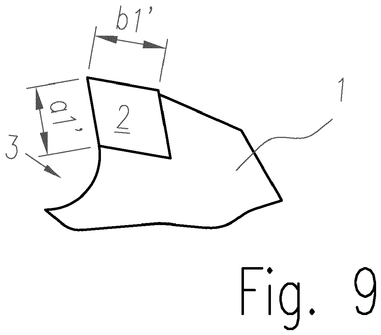

In Figuren 7 und 8 ist ein um den Punkt P symmetrisch ausgebildeter Schneidling 2 dargestellt, dessen Kantenlänge b1 im Neuzustand genauso groß ist wie die Kantenlänge b1'nach dem letztmöglichen Nachschärfvorgang. Entsprechendes gilt für die Kantenlängen a1 und a1'. Die Nachschärfzonen dieses Schneidlings 2 an der Spanfläche 2.3 und den beiden Freiflächen 2.1, 2.2 zeigt Figur 8. Den zum letztmöglichen Mal nachgeschärften Schneidling zeigt Figur 9.

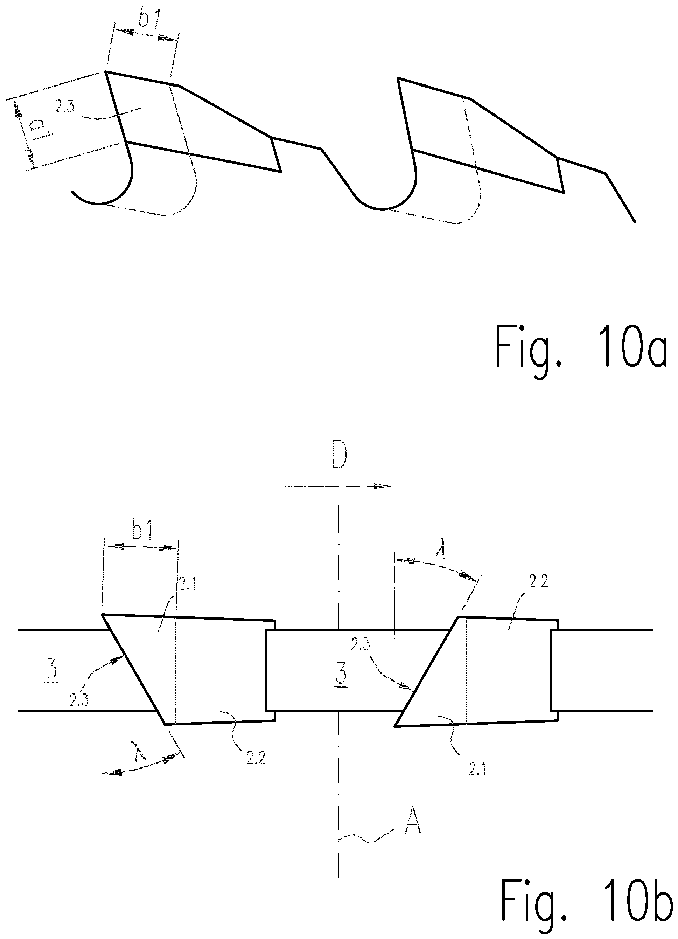

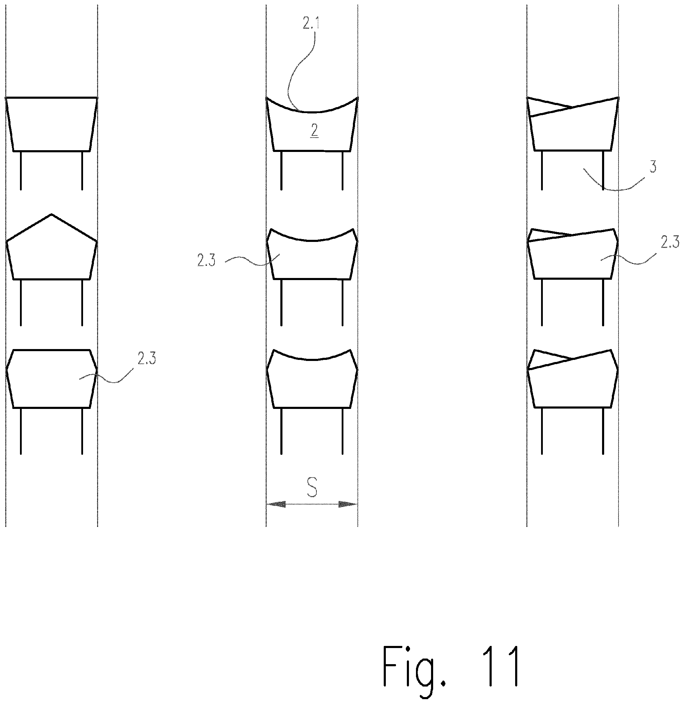

In einer bevorzugten Ausführungsform der Erfindung verlaufen die Spanflächen 2.3 der Schneidlinge 2 unter einem Achswinkel $\lambda$ zur Drehachse A, der zwischen 10° und 30° beträgt (vgl. Figur 10), wobei sich der große Achswinkel von bis zu 30° sehr positiv auf die Schnittqualität auswirkt und auch heikle Materialien gut bearbeitet werden können. In Verbindung mit einem Achswinkel $\lambda$ ist als die Kantenlänge b1 die lange Seite der ersten Freifläche 2.1 anzusehen, damit die für a1 und b1 getroffenen Aussagen auch hier Gültigkeit haben. Der Winkel $\gamma$ zwischen der Sitzfläche 1.1 und der Rückenfläche 1.2 ist kleiner als 90°, besser kleiner als 80° und noch besser kleiner als 70°, wodurch der Schneidling 2 an seiner bzw. der Rückenfläche 1.2 besser gegen die Schnittkräfte abgestützt wird. Zusätzlich bewirkt die sich im Wesentlichen tangential erstreckende Sitzfläche 1.1 beim thermischen Fügen des Schneidlings 2, z. B. durch Löten, eine geringere radiale Erstreckung der Wärmeeinflusszone in den Tragkörper 1, wodurch der Sägezahn 4 weniger rissanfällig wird, was der Langlebigkeit des Kreissägeblattes zu Gute kommt. Insbesondere wenn das Sägeblatt nur an der Spanfläche 2.3 nachgeschärft wird, sind komplexe Zahnprofilformen (z. B. Hohlschliff) an der Freifläche 2.1 möglich, ohne den Schärfaufwand zu erhöhen. Prinzipiell mögliche Zahnprofilformen und Zahnfolgen des Schneidlings 2 sowie die sich einstellende Breite S der Schnittfuge sind schematisch in Figur 11 dargestellt.

## Bezugszeichenliste

| | |
|---|---|
| 1 | Tragkörper |
| 1.0 | Ausnehmung |
| 1.1 | Sitzfläche |
| 1.2 | Rückenfläche |
| 2 | Schneidling |
| 2.1 | erste Freifläche |
| 2.2 | zweite Freifläche |
| 2.3 | Spanfläche |
| 3 | Spanraum |
| 4 | Sägezahn |
| a | projizierte Länge |
| a1 | Kantenlänge |
| a1' | Kantenlänge |
| b | projizierte Länge |
| b1 | Kantenlänge |
| b1' | Kantenlänge |
| A | Drehachse |
| D | Drehrichtung |
| P | Symmetriepunkt |
| R | radiale Richtung |
| S | Breite |
| T | tangentiale Richtung |
| $\beta$ | Winkel |
| $\beta'$ | Winkel |
| $\gamma$ | Winkel |
| $\lambda$ | Achswinkel |

## Patentansprüche

1. Kreissägeblatt mit einem Tragkörper (1) und einer Mehrzahl in dessen Umfang vorgesehenen Ausnehmungen (1.0), die eine Sitzfläche (1.1) und eine Rückenfläche (1.2) ausbilden und in die jeweils ein Schneidling (2) mit einer in Drehrichtung (D) weisenden Spanfläche (2.3) und einer nach radial außen weisenden Freifläche (2.1) eingesetzt ist, wobei die Freifläche (2.1) in einem ersten Winkel ($\beta$) zur Spanfläche (2.3) verläuft, und der Schneidling (2) eine zweite Freifläche (2.2) aufweist, die in einem zweiten Winkel ($\beta'$) zur Spanfläche (2.3) verläuft, wobei der erste Winkel ($\beta$) größer ist als der zweite Winkel ($\beta'$), **dadurch gekennzeichnet, dass** die in radialer Richtung (R) projizierte erste Länge (b) des Schneidlings (2) größer ist als seine in tangentialer Richtung (T) projizierte zweite Länge (a), und dass der erste Winkel ($\beta$) im Bereich von 50° bis 90° und der zweite Winkel ($\beta'$) im Bereich von 30° bis 80° liegt.

2. Kreissägeblatt nach Anspruch 1, **dadurch gekennzeichnet, dass** eine erste Kantenlänge (b1) der ersten Freifläche (2.1) in tangentialer Richtung (T) und eine zweite Kantenlänge (a1) der Spanfläche (2.3) in radialer Richtung (R) annähernd gleich groß sind.

3. Kreissägeblatt nach einem der vorstehenden Ansprüche, **dadurch gekennzeichnet, dass** der erste Winkel ($\beta$) 60° beträgt.

4. Kreissägeblatt nach einem der vorstehenden Ansprüche, **dadurch gekennzeichnet, dass** der zweite Winkel (β') 40° beträgt.

5. Kreissägeblatt nach einem der vorstehenden Ansprüche, **dadurch gekennzeichnet, dass** die Spanfläche (2.3) eine erste Kantenlänge und die erste Freifläche (2.1) eine zweite Kantenlänge aufweist, und das Verhältnis $\frac{a1}{b1}$ der zweiten Kantenlänge (a1) zur ersten Kantenlänge (b1) im Neuzustand des Schneidlings (2) identisch ist zum Verhältnis $\frac{a1'}{b1'}$ der letzten Kantenlänge (a1') zur letzten Kantenlänge (b1'), die sich nach dem letzten möglichen Schärfvorgang am Schneidling einstellen.

6. Kreissägeblatt nach einem der vorstehenden Ansprüche, **dadurch gekennzeichnet, dass** die Spanfläche (2.3) unter einem Achswinkel (λ) im Bereich ab 10°, insbesondere von 10° bis 30° verläuft.

7. Kreissägeblatt nach einem der vorstehenden Ansprüche, **dadurch gekennzeichnet, dass** der Winkel (γ) zwischen der Sitzfläche (1.1) und der Rückenfläche (1.2) kleiner als 90°, insbesondere kleiner als 80° oder kleiner als 70° ist.

8. Kreissägeblatt nach einem der vorstehenden Ansprüche, **dadurch gekennzeichnet, dass** die Geometrie des Schneidlings (2) in einem Schnitt senkrecht zur Drehachse (A) symmetrisch zu einem Punkt (P) ist.

9. Kreissägeblatt nach einem der vorstehenden Ansprüche, **dadurch gekennzeichnet, dass** das Verhältnis $\left(\frac{b}{a}\right)$ von erster Länge (b) zur zweiten Länge (a) größer als 1 ist, insbesondere 3:1 und bevorzugt 2:1 beträgt.

10. Verfahren zum Nachschärfen eines Kreissägeblatts nach einem der vorstehenden Ansprüche, **dadurch gekennzeichnet, dass** eine Spanfläche (2.3) und eine Freifläche (2.1) des Schneidlings (2) spanabtragend so bearbeitet werden, dass das Verhältnis $\left(\frac{b}{a}\right)$ einer ersten Kantenlänge (b1) der Freifläche (2.1) und einer Kantenlänge (a1) der Spanfläche (2.3) vor und nach der spanabhebenden Bearbeitung identisch ist.

**Claims**

1. A circular saw blade with a supporting body (1) and a plurality of recesses (1.0) provided in its periphery, which form a seat surface (1.1) and a back surface (1.2) and into each of which a cutting blank (2) is inserted with a cutting surface (2.3) pointing in the direction of rotation (D) and a clearance surface (2.1) pointing radially outwards, the clearance surface (2.1) extending at a first angle (β) to the cutting surface (2.3) and the cutting blank (2) having a second clearance surface (2. 2) which extends at a second angle (β') to the cutting surface (2.3), the first angle (β) being greater than the second angle (β'), **characterised in that** the first length (b) of the cutting blank (2) projected in the radial direction (R) is greater than its second length (a) projected in the tangential direction (T), and **in that** the first angle (β) lies in the range from 50° to 90° and the second angle (β') lies in the range from 30° to 80°.

2. The circular saw blade according to claim 1, **characterised in that** a first edge length (b1) of the first clearance surface (2.1) in the tangential direction (T) and a second edge length (a1) of the clearance surface (2.3) in the radial direction (R) are approximately equal.

3. The circular saw blade according to one of the preceding claims, **characterised in that** the first angle (β) is 60°.

4. The circular saw blade according to one of the preceding claims, **characterised in that** the second angle (β') is 40°.

5. The circular saw blade according to one of the preceding claims, **characterised in that** the cutting surface (2.3) has a first edge length and the first clearance surface (2.1) a second edge length, and the ratio $\frac{a1}{b1}$ of the second edge length (a1) to the first edge length (b1) when the cutting blank (2) is new is identical to the ratio $\frac{a1'}{b1'}$ of the last edge length (a1') to the last edge length (b1') that occurs after the last possible sharpening process on the cutting blank.

6. The circular saw blade according to one of the preceding claims, **characterised in that** the cutting surface (2.3) extends at an axial angle (λ) in the range from 10°, in particular from 10° to 30°.

7. The circular saw blade according to one of the preceding claims, **characterised in that** the angle (γ) between the seat surface (1.1) and the back surface (1.2) is smaller than 90°, particularly smaller than 80° or smaller than 70°.

8. The circular saw blade according to one of the preceding claims, **characterised in that** the geometry of the cutting blank (2) in a section perpendicular to the axis of rotation (A) is symmetrical to a point (P).

9. The circular saw blade according to one of the preceding claims, **characterised in that** the ratio $\left(\frac{b}{a}\right)$ of a first length (b) to the second length (a) is greater than 1, in particular 3:1 and preferably 2:1.

10. A method for resharpening a circular saw blade according to one of the preceding claims, **characterised in that** a cutting surface (2.3) and a clearance surface (2.1) of the cutting blank (2) are machined in such a way that the ratio $\left(\frac{b}{a}\right)$ of a first edge length (b1) of the clearance surface (2.1) and an edge length (a1) of the cutting surface (2.3) is identical before and after the machining.

**Revendications**

1. Lame de scie circulaire comprenant un corps de support (1) et une pluralité d'évidements (1.0) prévus dans sa périphérie, qui forment une surface d'assise (1.1) et une surface de dos (1.2) et dans chacun desquels est inséré un élément de coupe (2) ayant une face d'attaque (2. 3) dirigée en direction de rotation (D) et une face de dépouille (2.1) dirigée radialement vers l'extérieur, la face de dépouille (2.1) s'étendant selon un premier angle (β) par rapport à la face d'attaque (2.3), et l'élément de coupe (2) présentant une deuxième face de dépouille (2.2) qui s'étend selon un deuxième angle (β') par rapport à la face d'attaque (2.3), le premier angle (β) étant supérieur au deuxième angle (β'), **caractérisée en ce que** la première longueur (b) de l'élément de coupe (2) projetée dans la direction radiale (R) est supérieure à sa deuxième longueur (a) projetée dans la direction tangentielle (T), et **en ce que** le premier angle (β) se situe dans la plage de 50° à 90° et le deuxième angle (β') se situe dans la plage de 30° à 80°.

2. Lame de scie circulaire selon la revendication 1, **caractérisée en ce qu'**une première longueur d'arête (b1) de la première face de dépouille (2.1) dans la direction tangentielle (T) et une deuxième longueur d'arête (a1) de la face d'attaque (2.3) dans la direction radiale (R) sont approximativement de la même taille.

3. Lame de scie circulaire selon l'une des revendications précédentes, **caractérisée en ce que** le premier angle (β) est de 60°.

4. Lame de scie circulaire selon l'une des revendications précédentes, **caractérisée en ce que** le deuxième angle (β') est de 40°.

5. Lame de scie circulaire selon l'une des revendications précédentes, **caractérisée en ce que** la face d'attaque (2.3) présente une première longueur d'arête et la première face de dépouille (2.1) présente une deuxième longueur d'arête, et le rapport $a1/b1$ de la deuxième longueur d'arête (a1) sur la première longueur d'arête (b1) à l'état neuf de l'élément de coupe (2) est identique au rapport $a1'/b1'$ de la dernière longueur d'arête (a1') sur la dernière longueur d'arête (b1'), qui s'établissent après le dernier affûtage possible sur l'élément de coupe.

6. Lame de scie circulaire selon l'une des revendications précédentes, **caractérisée en ce que** la face d'attaque (2.3) s'étend selon un angle d'axe (λ) dans la plage allant de 10°, en particulier de 10° à 30°.

7. Lame de scie circulaire selon l'une des revendications précédentes, **caractérisée en ce que** l'angle (γ) entre la surface d'assise (1.1) et la surface de dos (1.2) est inférieur à 90°, en particulier inférieur à 80° ou inférieur à 70°.

8. Lame de scie circulaire selon l'une des revendications précédentes, **caractérisée en ce que** la géométrie de l'élément de coupe (2) est symétrique par rapport à un point (P) dans une coupe perpendiculaire à l'axe de rotation (A).

9. Lame de scie circulaire selon l'une des revendications précédentes, **caractérisée en ce que** le rapport $b/a$ de la première longueur (b) sur la deuxième longueur (a) est supérieur à 1, en particulier est de 3:1 et de préférence de 2:1.

10. Procédé de réaffûtage d'une lame de scie circulaire selon l'une des revendications précédentes, **caractérisé en ce qu'**une face d'attaque (2.3) et une face de dépouille (2.1) de l'élément de coupe (2) sont usinées par enlèvement de copeaux de telle sorte que le rapport ($b/a$) d'une première longueur d'arête (b1) de la face de dépouille (2.1) et d'une longueur d'arête (a1) de la face d'attaque (2.3) est identique avant et après l'usinage par enlèvement de copeaux.

Fig. 1

Fig. 2

Fig. 3

Fig. 4

Fig. 5

Fig. 6

Fig. 7

Fig. 8

Fig. 9

Fig. 10a

Fig. 10b

Fig. 11

**EP 3 626 374 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008006530 A
- DE 202004005773 U1
- WO 2015098360 A1
- US 4135421 A1
- US 6883412 B1
- DE 9307394 U1
- SU 1323387 A1
- EP 2910327 A1
- US 4135421 A